(19)

Europäisches
Patentamt

European
Patent Office

Office européen
des brevets

(11)　**EP 4 524 208 A1**

(12)　## EUROPEAN PATENT APPLICATION
published in accordance with Art. 153(4) EPC

(43) Date of publication:
　　**19.03.2025　Bulletin 2025/12**

(21) Application number: **23830426.5**

(22) Date of filing: **29.06.2023**

(51) International Patent Classification (IPC):
　　$C09D\ 1/00^{(2006.01)}$　　$C09D\ 7/61^{(2018.01)}$
　　$C23C\ 22/33^{(2006.01)}$

(52) Cooperative Patent Classification (CPC):
　　**B05D 3/02; B05D 7/14; B05D 7/24; C09D 1/00;**
　　**C09D 5/08; C09D 7/61; C23C 22/33**

(86) International application number:
　　**PCT/CN2023/103987**

(87) International publication number:
　　**WO 2024/002261 (04.01.2024 Gazette 2024/01)**

(84) Designated Contracting States:
　　**AL AT BE BG CH CY CZ DE DK EE ES FI FR GB**
　　**GR HR HU IE IS IT LI LT LU LV MC ME MK MT NL**
　　**NO PL PT RO RS SE SI SK SM TR**
　　Designated Extension States:
　　**BA**
　　Designated Validation States:
　　**KH MA MD TN**

(30) Priority:　**29.06.2022　CN 202210752109**

(71) Applicant: **BAOSHAN IRON & STEEL CO., LTD.**
　　**Shanghai 201900 (CN)**

(72) Inventors:
　　• **JI, Yaming**
　　　**Shanghai 201900 (CN)**
　　• **YANG, Yongjie**
　　　**Shanghai 201900 (CN)**

　　• **LI, Guobao**
　　　**Shanghai 201900 (CN)**
　　• **WU, Meihong**
　　　**Shanghai 201900 (CN)**
　　• **LING, Chen**
　　　**Shanghai 201900 (CN)**
　　• **ZHAO, Zipeng**
　　　**Shanghai 201900 (CN)**
　　• **MA, Changsong**
　　　**Shanghai 201900 (CN)**
　　• **GUO, Jianguo**
　　　**Shanghai 201900 (CN)**

(74) Representative: **Maiwald GmbH**
　　**Elisenhof**
　　**Elisenstraße 3**
　　**80335 München (DE)**

(54)　**PAINT, ORIENTED SILICON STEEL SHEET HAVING COATING FORMED FROM PAINT, AND MANUFACTURING METHOD THEREFOR**

(57)　The present invention relates to a coating material for surface coating of oriented silicon steel. The coating material comprises: phosphate; colloidal silica; and at least one vanadate selected from vandates of Ce, Mn, Co, Cu, or Fe. The coating material does not comprise Cr. The present invention further relates to oriented silicon steel having a surface coating formed from the coating material. The present invention further relates to a manufacturing method for oriented silicon steel having a surface coating formed from the coating material. The coating material of the present invention does not comprise chromium. The coating formed from the coating material can still provide sufficient moisture absorption resistance and apply sufficient tension to the oriented silicon steel sheet while protecting the environment, so that iron loss and magnetostriction of the oriented silicon steel are further reduced, and a high-quality transformer iron core material is obtained.

**EP 4 524 208 A1**

**Description**

TECHNICAL FIELD

The present invention relates to the field of a steel plate coating, in particular to a coating material for surface coating of oriented silicon steel, an oriented silicon steel plate with the surface coating and a manufacturing method thereof.

BACKGROUND ART

An oriented silicon steel plate refers to a steel plate with a silicon content in the range of 2.8wt%-3.5wt% obtained by cold rolling and heat treatment processes having a texture of {110}<001>. Its magnetic properties along the rolling direction are significantly better than transversal magnetic properties. An oriented silicon steel plate is mainly applied as a transformer iron core material. To reduce energy loss and noise level of the transformer, the oriented silicon steel plate is preferred to possess low iron loss and low noise. Currently, it is known that iron loss value and magnetostriction value of an oriented silicon steel plate can be reduced by applying appropriate tensile stress to the oriented silicon steel plate.

In prior arts, the above problems are usually solved by applying a chromium-containing coating to the surface of the oriented silicon steel plate. The chromium-containing coating possesses good insulation properties. In addition, the coating generates tensile stress to the steel plate, thereby reducing the iron loss and magnetostriction value of the steel plate due to different thermal expansion coefficients between the coating and the steel plate during heat treatment. However, as the coating solution used for the coating comprises hexavalent chromium, the waste liquid generated during its production comprises a large amount of environmentally harmful hexavalent chromium, which will seriously pollute the environment.

With the increasing attention to environmental protection in recent years, the demand for products that do not comprise harmful substances such as chromium and lead has increased. A chromium-free coating (a coating that does not comprise chromium) is also expected to be developed for the oriented silicon steel. However, the oriented silicon steel using the chromium-free coating usually suffers from significant reductions in moisture absorption resistance and insufficient tension exertion. Therefore, chromium-free coatings are rarely used or even cannot be employed.

Chinese patent literature titled "Solution for treatment of insulating coating film for oriented electromagnetic steel sheet, and method for production of oriented electromagnetic steel sheet having insulating coating film thereon" (publication number: CN101790599A, publication date: July 28, 2010) discloses a chromium-free solution for treatment of insulating coating film for oriented electromagnetic steel sheet, which comprises at least one phosphate of Mg, Ca, Ba, Sr, Zn, Al, and Mn, and chelate of colloidal silica and titanium. It can provide improved adhesion and coating tension. However, the chelate tend to be decomposed during heat treatment to produce carbon, which adversely affects the coating tension.

Chinese patent literature titled "Oriented electromagnetic steel sheet having chromium-free insulation coating and insulation coating agent therefor" (publication number: CN101223300A, publication date: July 16, 2008) discloses a chromium-free insulating coating agent for oriented electromagnetic steel sheet. Its main components are phosphate, colloidal silica, and inorganic compound of Fe, Ni, Co, Cu, Sr, or Mo with a particle size of 15 nm or less, such as hydroxides, oxides, carbonates, silicates, or molybdates. However, the hydroxide colloid is not stable in phosphate solution system, and its ability to fix free phosphate radicals is not sufficient, which can easily reduce the moisture absorption resistance and anti-adhesion property of the oriented silicon steel plate.

Chinese patent literature titled "Chromium-free coating agent for grain-oriented electrical steel sheet, preparation method thereof, electrical steel sheet using the same, and manufacturing method thereof" (publication number: CN102119239A, publication date: July 6, 2011) discloses a chromium-free coating agent for a grain-oriented electrical steel sheet comprising phosphate, colloidal silica, and hematite silicon sol. However, the hematite silicon sol is difficult to exist stably in phosphate system and its preparation is difficult, making it difficult to achieve industrial production.

In light of the above problems, it is expected to obtain coating material for oriented silicon steel plate that meets the requirements of industrial production, is free of chromium, remains stable during heat treatment and possesses good coatability. The surface coating of the oriented steel plate obtained by the coating material can have good moisture absorption resistance, corrosion resistance, heat resistance, and anti-adhesion property, while also providing sufficient tension effect to further reduce iron loss and magnetostriction of the oriented silicon steel.

SUMMARY OF THE INVENTION

The objective of the present invention is to provide a coating material for surface coating of oriented silicon steel. The coating material does not comprise chromium. It can provide the oriented silicon steel with good moisture absorption resistance, tension, corrosion resistance, heat resistance, and anti-adhesion property to further reduce iron loss and magnetostriction of the oriented silicon steel while protecting the environment.

In order to achieve the above objective, the inventors have unexpectedly discovered that by using at least one vanadate selected from Ce, Mn, Co, Cu, and Fe in combination with phosphate in the coating material, the vanadate and phosphate radical in the phosphate form insoluble substance during heat treatment of the coating material, thereby achieving the effects of fixing the phosphate radicals and applying tension to the oriented silicon steel, thus forming a coating with good moisture absorption resistance, tension, corrosion resistance, heat resistance, and anti-adhesion property on the surface of the oriented silicon steel, thereby obtaining oriented silicon steel with good iron loss and magnetostriction.

The present invention relates to a coating material for surface coating of oriented silicon steel, wherein the coating material comprises:

phosphate;
colloidal silica;
and at least one vanadate selected from vandates of Ce, Mn, Co, Cu, or Fe;
the coating material does not comprise Cr.

After the above described coating material is applied on the oriented silicon steel plate, the coating material must undergo heat treatment to form a coating, wherein the phosphate can form a phosphate coating with a network or chain structure on the surface of the steel plate after the heat treatment. Colloidal silica is used as a filler in the present invention to form a ceramic layer with a lower thermal expansion coefficient after heat treatment, thereby providing tension for the coating, which is beneficial to improving coatability of the coating material. In the present invention, "colloidal silica" generally refers to a water dispersion system of nanoscale silica having silanol groups. During heat treatment, Ce, Mn, Co, Cu, Fe, and V in vanadate can form insoluble phosphate compounds with phosphate radicals in phosphate, thereby fixing the phosphate radicals on oriented silicon steel and preventing free phosphate radicals from remaining in the coating. Thus, moisture absorption resistance, tension, corrosion resistance, and anti-adhesion property of the coating can be improved.

There are no specific limitations on the vanadate in the present invention, as long as it can form insoluble vanadium phosphate with phosphate radicals. Examples of the vanadate can be orthovanadate, pyrovanadate, or metavanadate. Preferably, the vanadate is orthovanadate ($VO_4^{3-}$), pyrovanadate ($V_2O_7^{4-}$), and/or metavanadate ($VO_3^-$) of Ce, Mn, Co, Cu, or Fe.

Preferably, the coating material comprises phosphate of 25-50%, colloidal silica of 25-50%, and vanadate of 10-50% by mass percentage.

Preferably, the phosphate is at least one selected from phosphates of Mg, Al, Ca, Zn, and Mn.

Preferably, the phosphate is magnesium dihydrogen phosphate, aluminum dihydrogen phosphate, calcium dihydrogen phosphate, zinc dihydrogen phosphate, and manganese dihydrogen phosphate.

Preferably, a mass ratio of the colloidal silica to the phosphate is 0.5-1.5, preferably 1.0-1.5. Good coatability can be obtained within this range, which is beneficial to improving the coatability of the coating material of the present invention.

Preferably, a mass ratio of the vanadate to the phosphate is 0.2-2.0, preferably 0.2-1.5, more preferably 0.2-1.0, even more preferably 0.2-0.5.

In the technical solution of the present invention, when the mass ratio of at least one vanadate (such as orthovanadate, pyrovanadate, and metavanadate) to phosphate is 0.2 or more, the moisture absorption resistance of the coating can be significantly improved. However, when the mass ratio of vanadate to phosphate is greater than 2.0, the tension and corrosion resistance of the coating will be reduced. Therefore, in the coating material for the oriented silicon steel plate of the present invention, the mass ratio of vanadate to phosphate is limited to 0.2-2.0.

Preferably, the coating material for surface coating of oriented silicon steel also comprises boric acid. By adding boric acid to the coating material, the sintering compactness, tension, and heat resistance of the coating can be further improved.

Preferably, a content of the boric acid is 0.02-0.2 parts by mass relative to the colloidal silica of 100 parts by mass.

Adding an appropriate amount of boric acid can further improve the sintering compactness, tension, and heat resistance of the coating. However, when the mass ratio of boric acid to colloidal silica exceeds 0.2, the tension effect, heat resistance, and corrosion resistance will be reduced. Therefore, in the coating material of the present invention, the mass ratio of boric acid to colloidal silica is limited in the range of 0.02-0.2.

Preferably, a particle size of the colloidal silica is 5-50 nm. Adjusting the particle size of the colloidal silica is beneficial to forming a compact ceramic layer after heat treatment, obtaining better tension effect and coating surface morphology.

The present invention also provides an oriented silicon steel plate. The oriented silicon steel plate includes a substrate and a coating formed on the surface of the substrate. The coating is formed from the previously described coating material. The iron loss value and magnetostriction value of the oriented silicon steel plate are reduced by the coating of the coating material formed on the surface of the oriented silicon steel plate of the present invention, utilizing the tensile stress exerted by the coating on the oriented silicon steel plate, making it suitable as a transformer core material, and effectively reducing energy loss and noise level of the transformer.

Preferably, the phosphate in the coating forms a network or chain structure.

Preferably, the coating comprises vanadium phosphate.

Preferably, in the oriented silicon steel plate of the present invention, a dry film amount of the coating is 2-10 $g/m^2$ on one side. If the dry film amount of the coating on one side is below 2 $g/m^2$, the coating will not be able to provide sufficient tension; if the dry film amount of the coating is higher than 10 $g/m^2$ on one side, the amount of coating material will be too much, resulting in an uneven thickness of the coating after heat treatment, which can easily lead to a reduction in the lamination coefficient of the steel plate.

The substrate of the oriented silicon steel of the present invention is not specifically limited. Oriented silicon steel substrates commonly used in the field can be used. For example, an oriented silicon steel substrate with Si element content of 2-4 wt% can be used.

Preferably, a thickness of the substrate is 0.18-0.35 mm.

Preferably, the oriented silicon steel plate also has a magnesium silicate bottom layer, which is formed by the reaction of a separant (usually MgO) and silicon oxide ($SiO_2$) on the surface of the steel plate under high-temperature annealing conditions (for example, at 1200°C). The magnesium oxide bottom layer is located between the substrate and the coating of the oriented silicon steel plate, thereby increasing adhesion of the coating to the steel plate.

Preferably, the coating of the oriented silicon steel plate has a tension of 7.1-10.5 MPa and a phosphorus dissolution content of lower than 75 $\mu g/150\ cm^2$.

The present invention further provides a manufacturing method for an oriented silicon steel plate, a surface of the oriented silicon steel plate has a coating formed from the above described coating material, the manufacturing method comprises the following steps:

1) applying the above described coating material on a substrate of the oriented silicon steel plate to form a coating on a surface of the substrate of the oriented silicon steel plate; and
2) sintering.

Preferably, in step 2), the sintering is performed under the condition that the substrate surface temperature is 800-900°C and the sintering duration is 20 seconds or more. If the temperature is below 800°C, the steel plate will not be flat enough, and the tension effect imparted by the coating to the steel plate will not be significant; if the temperature is higher than 900°C, the silica in the coating will easily crystallize, resulting in a reduction in compactness and the tension effect of the coating.

Preferably, the coating material is applied on the substrate of the oriented silicon steel plate in the form of a solution in water.

Preferably, the manufacturing method satisfies at least one of the following:

the coating material is applied on the substrate with a dry film amount of 2-10 $g/m^2$ on one side;
the manufacturing method also includes forming a magnesium silicate layer between the substrate and the coating.

Compared with prior arts, the coating material and the oriented silicon steel plate with the coating formed from the coating material of the present invention possess the following beneficial effects:

(1) the coating material of the present invention does not comprise harmful metal element chromium, and causes little pollution to the surrounding environment, having good environmental benefits;
(2) the coating material of the present invention possesses good stability and coatability, which can achieve industrial production and use; and
(3) the surface coating of the oriented silicon steel plate according to the present invention possesses good moisture absorption resistance, tension, corrosion resistance, heat resistance, and anti-adhesion property, which can further reduce iron loss and magnetostriction of the oriented silicon steel.

DETAILED DESCRIPTION OF THE EMBODIMENTS

More detailed illustration of the present invention will be provided by examples, thereby enhancing clarity and facilitating better understanding of its content. However, it should be noted that the examples disclosed below are only illustrative examples of the detailed description of the embodiments of the present invention. The present invention is not limited to these examples.

## 1. Preparation of Coating Materials for Surface Coating of Oriented Silicon Steel

The coating materials for surface coating of the oriented silicon steel in Examples 1-28 and Comparative Examples 1-6 of the present invention are prepared by the following method: according to the formulation listed in Table 1, directly mixed the phosphate solution and colloidal silica, and then optionally added boric acid in form of a solid reagent (boric acid was not added in Example 28), stirred thoroughly to completely dissolve the boric acid, and then added vanadate powder to the solution in form of high-speed dispersion or ultrasonic dispersion to form a coating material.

Table 1 lists the mass percentage (wt%) of each component and the particle size of colloidal silica in the coating materials of Examples 1-28 and Comparative Examples 1-6. Among them, all of the amounts of vanadate in Comparative Examples 1-6 do not meet the requirement of the present invention that the mass ratio of vanadate to phosphate is 0.2-2.0.

Table 1

| Number | Phosphate | | Colloidal Silica | | Vanadate | | Content of Boric Acid |
| | Type | Content | Content | Particle Size (nm) | Type | Content | |
| --- | --- | --- | --- | --- | --- | --- | --- |
| Example 1 | Magnesium Dihydrogen Phosphate | 100 | 100 | 10 | Cobalt Orthovanadate | 20 | 0.02 |
| Example 2 | Magnesium Dihydrogen Phosphate | 100 | 100 | 10 | Cobalt Orthovanadate | 50 | 0.05 |
| Example 3 | Magnesium Dihydrogen Phosphate | 100 | 100 | 10 | Cobalt Orthovanadate | 100 | 0.1 |
| Example 4 | Magnesium Dihydrogen Phosphate | 100 | 100 | 10 | Cobalt Orthovanadate | 150 | 0.15 |
| Example 5 | Magnesium Dihydrogen Phosphate | 100 | 100 | 10 | Cobalt Orthovanadate | 200 | 0.2 |
| Example 6 | Magnesium Dihydrogen Phosphate | 100 | 100 | 10 | Cerium Orthovanadate | 20 | 0.02 |
| Example 7 | Magnesium Dihydrogen Phosphate | 100 | 100 | 10 | Cerium Orthovanadate | 50 | 0.05 |
| Example 8 | Magnesium Dihydrogen Phosphate | 100 | 100 | 10 | Cerium Orthovanadate | 100 | 0.1 |
| Example 9 | Magnesium Dihydrogen Phosphate | 100 | 100 | 10 | Cerium Orthovanadate | 100 | 0.1 |
| Example 10 | Magnesium Dihydrogen Phosphate | 100 | 100 | 5 | Cerium Orthovanadate | 100 | 0.1 |
| Example 11 | Magnesium Dihydrogen Phosphate | 100 | 100 | 50 | Cerium Orthovanadate | 100 | 0.1 |
| Example 12 | Aluminum Dihydrogen Phosphate | 100 | 50 | 10 | Cerium Orthovanadate | 100 | 0.1 |
| Example 13 | Magnesium Dihydrogen Phosphate | 100 | 150 | 10 | Cerium Orthovanadate | 100 | 0.1 |
| Example 14 | Aluminum Dihydrogen Phosphate | 100 | 85 | 10 | Cerium Orthovanadate | 100 | 0.1 |
| Example 15 | 70% Aluminum Dihydrogen Phosphate+ 30% Calcium Dihydrogen Phosphate | 100 | 85 | 10 | Cerium Orthovanadate | 100 | 0.1 |

(continued)

| Number | Phosphate | | | Colloidal Silica | | Vanadate | | Content of Boric Acid |
|---|---|---|---|---|---|---|---|---|
| | Type | Content | Content | Particle Size (nm) | Type | Content | |
| Example 16 | 70% Magnesium Dihydrogen Phosphate+ 30% Zinc Dihydrogen Phosphate | 100 | 95 | 10 | Cerium Orthovanadate | 100 | 0.1 |
| Example 17 | 70% Aluminum Dihydrogen Phosphate+ 30% Manganese Dihydrogen Phosphate | 100 | 80 | 10 | Cerium Orthovanadate | 100 | 0.1 |
| Example 18 | Magnesium Dihydrogen Phosphate | 100 | 100 | 10 | Cerium Orthovanadate | 100 | 0.1 |
| Example 19 | Magnesium Dihydrogen Phosphate | 100 | 100 | 10 | Cerium Orthovanadate | 150 | 0.1 |
| Example 20 | Magnesium Dihydrogen Phosphate | 100 | 100 | 10 | Cerium Orthovanadate | 200 | 0.2 |
| Example 21 | Magnesium Dihydrogen Phosphate | 100 | 100 | 10 | Manganese Metavanadate | 20 | 0.2 |
| Example 22 | Magnesium Dihydrogen Phosphate | 100 | 100 | 10 | Manganese Metavanadate | 50 | 0.05 |
| Example 23 | Magnesium Dihydrogen Phosphate | 100 | 100 | 10 | Manganese Metavanadate | 100 | 0.1 |
| Example 24 | Magnesium Dihydrogen Phosphate | 100 | 100 | 10 | Manganese Metavanadate | 150 | 0.15 |
| Example 25 | Magnesium Dihydrogen Phosphate | 100 | 100 | 10 | Manganese Metavanadate | 200 | 0.2 |
| Example 26 | Magnesium Dihydrogen Phosphate | 100 | 100 | 10 | Iron Metavanadate | 100 | 0.1 |
| Example 27 | Magnesium Dihydrogen Phosphate | 100 | 100 | 10 | Copper Metavanadate | 100 | 0.1 |
| Example 28 | Magnesium Dihydrogen Phosphate | 100 | 100 | 10 | Copper Metavanadate | 100 | 0 |
| Comparative Example 1 | Magnesium Dihydrogen Phosphate | 100 | 100 | 10 | Cobalt Orthovanadate | **15** | 0.02 |
| Comparative Example 2 | Magnesium Dihydrogen Phosphate | 100 | 100 | 10 | Cobalt Orthovanadate | **250** | 0.25 |
| Comparative Example 3 | Magnesium Dihydrogen Phosphate | 100 | 100 | 10 | Cerium Orthovanadate | **10** | 0.1 |
| Comparative Example 4 | Magnesium Dihydrogen Phosphate | 100 | 100 | 10 | Cerium Orthovanadate | **250** | 0.25 |
| Comparative Example 5 | Magnesium Dihydrogen Phosphate | 100 | 100 | 10 | Manganese Metavanadate | **15** | 0.1 |
| Comparative Example 6 | Magnesium Dihydrogen Phosphate | 100 | 100 | 10 | Manganese Metavanadate | **250** | 0.25 |

## 2. Manufacture of Oriented Silicon Steel Plates with Surface Coating

The coating materials of Examples 1-28 and Comparative Examples 1-6 were applied on the substrate of oriented silicon steel plates. Each oriented silicon steel plate with the coating formed from the coating material was obtained by the following steps (the key technical parameters are listed in Table 2), wherein the substrate of the oriented silicon steel plate comprises the following chemical elements by mass percentage: C: 0.046%, Si: 3.32%, S: 0.006%, soluble Al: 0.027%, N: 0.006%, Mn: 0.012%, the balance is Fe and other unavoidable impurities:

(1) Smelting and casting based on the mass percentage of each chemical element described above to obtain a steel billet.
(2) Hot-rolling the steel billet into a hot-rolled plate with a thickness of 2.8 mm after heating at 1150°C.
(3) Pickling the hot-rolled plate and cold-rolling it into a cold-rolled plate with a thickness of 0.18-0.35 mm.
(4) Subjecting the cold-rolled plate to continuous nitriding treatment in a moist ammonia-filled nitrogen and hydrogen protective atmosphere after decarburization annealing treatment.
(5) Coating a magnesium oxide-based separant on steel plate after nitriding treatment.
(6) Coiling the steel plate, and then performing secondary recrystallization annealing in a dry protective atmosphere (such as a mixture of nitrogen and hydrogen). The annealing temperature was 1200°C and held for 20 hours to obtain a substrate with a Gaussian texture covered by a magnesium silicate bottom layer on surface.
(7) Coating the above described coating material of the present invention to the surface of the substrate.
(8) Sintering at 800-900°C for 20 seconds or more to obtain an oriented silicon steel plate with surface coating. The dry film coating amount of surface coating is 2-10 $g/m^2$ on one side.

The key process parameters of the manufacturing method of the oriented silicon steel plates of Examples 1-28 and Comparative Examples 1-6 are shown in Table 2.

Table 2

| | | Step (6) | Step (8) | | |
|---|---|---|---|---|---|
| | | Substrate Thickness (mm) | Sintering Temperature (°C) | Sintering Duration (s) | Dry Film Coating Amount on One Side ($g/m^2$) |
| | Example 1 | 0.23 | 800 | 30 | 4.5 |
| | Example 2 | 0.23 | 830 | 30 | 4.5 |
| | Example 3 | 0.23 | 840 | 30 | 4.5 |
| | Example 4 | 0.23 | 850 | 40 | 4.5 |
| | Example 5 | 0.23 | 880 | 50 | 4.5 |
| | Example 6 | 0.23 | 850 | 50 | 4.5 |
| | Example 7 | 0.23 | 850 | 30 | 4.5 |
| | Example 8 | 0.23 | 850 | 30 | 4.5 |
| | Example 9 | 0.23 | 850 | 30 | 4.5 |
| | Example 10 | 0.23 | 850 | 30 | 4.5 |
| | Example 11 | 0.23 | 850 | 30 | 4.5 |
| | Example 12 | 0.23 | 850 | 30 | 4.5 |
| | Example 13 | 0.23 | 850 | 30 | 4.5 |
| | Example 14 | 0.18 | 850 | 30 | 5.5 |
| | Example 15 | 0.27 | 850 | 30 | 5.0 |
| | Example 16 | 0.30 | 850 | 30 | 3.5 |
| | Example 17 | 0.35 | 850 | 30 | 3.0 |
| | Example 18 | 0.23 | 850 | 30 | 4.5 |
| | Example 19 | 0.23 | 850 | 30 | 4.5 |
| | Example 20 | 0.23 | 850 | 30 | 4.5 |

(continued)

|  | Step (6) | Step (8) | | |
| --- | --- | --- | --- | --- |
|  | Substrate Thickness (mm) | Sintering Temperature (°C) | Sintering Duration (s) | Dry Film Coating Amount on One Side (g/m$^2$) |
| Example 21 | 0.23 | 850 | 30 | 4.5 |
| Example 22 | 0.23 | 850 | 30 | 4.5 |
| Example 23 | 0.23 | 850 | 30 | 4.5 |
| Example 24 | 0.23 | 850 | 30 | 4.5 |
| Example 25 | 0.23 | 850 | 30 | 4.5 |
| Example 26 | 0.23 | 850 | 30 | 4.5 |
| Example 27 | 0.23 | 850 | 30 | 4.5 |
| Example 28 | 0.23 | 850 | 30 | 4.5 |
| Comparative Example 1 | 0.23 | 850 | 30 | 4.5 |
| Comparative Example 2 | 0.23 | 870 | 30 | 4.5 |
| Comparative Example 3 | 0.23 | 850 | 30 | 4.5 |
| Comparative Example 4 | 0.23 | 850 | 30 | 4.5 |
| Comparative Example 5 | 0.23 | 850 | 30 | 4.5 |
| Comparative Example 6 | 0.23 | 850 | 30 | 4.5 |

## 3. Performance Evaluation of Oriented Silicon Steel Plates with Surface Coating

The oriented silicon steel plates of Examples 1-28 and Comparative Examples 1-6 of the present invention were subjected to performance tests, including tests of coating tension, moisture absorption resistance, heat resistance, corrosion resistance, and anti-adhesion property thereof. The test methods are as follows:

(1) Coating tension σ: with the rolling direction as the length direction, the oriented silicon steel plate was cut into a sample plate with a length of 300 mm × a width of 30 mm. The coating was then removed, the sample plate was bent to test its amount of warpage, and the tension σ of the coating was calculated by the following formula.

$$\sigma \approx \frac{E \times t \times H}{L^2} \times 1000$$

In the above formula, σ represents the coating tension, and its unit can be MPa; E represents the Young's modulus of the steel plate, and its unit can be GPa; t represents the thickness of the steel plate, and its unit can be mm; H represents the amount of warpage, and its unit can be mm; L represents the length of the steel plate, and its unit can be mm.

(2) Moisture absorption resistance: the oriented silicon steel plate was boiled in pure water at 100°C and was then quantitatively analyzed for the phosphorus content dissolved in the coating per unit area in μg/150cm$^2$.

(3) Heat resistance: the degradation of the coating tension and insulation property of the surface coating of the oriented silicon steel plate was tested after stress relief annealing treatment. The process conditions of the stress relief annealing treatment were at 850°C and under 100% $N_2$ gas for 4 hours. The 4 grades for evaluating heat resistance were: excellent (reduction in tension and insulation < 20%), good (20% ≤ reduction in tension and insulation < 30%), medium (30% ≤ reduction in tension and insulation < 40%), and poor (reduction in tension and insulation ≥ 40%).

(4) Corrosion resistance: the corrosion resistance of the coating was evaluated by a salt spray test. The salt spray test solution was a 5% NaCl solution, the test temperature was 35°C, and the test duration was 10 hours. The 4 grades for evaluating corrosion resistance were: excellent (rust area < 5%), good (5% ≤ rust area < 10%), medium (10% ≤ rust area < 30%), and poor (rust area ≥ 30%).

(5) Anti-adhesion property: Oriented silicon steel plates of the same size were stacked together, and a pressure of 80 kg/cm$^2$ was applied vertically to the surface of the stacked oriented silicon steel plates. They were then heat treated at 850°C for 4 hours in $N_2$ gas with a dew point of 10°C. The anti-adhesion property of the coating was evaluated by testing the average value of the peeling force F between each oriented silicon steel plate. The smaller the peeling force, the better the anti-adhesion property. The 4 grades for evaluating anti-adhesion property were: excellent (F < 100 g/m$^2$), good (100 ≤ F < 250 g/m$^2$), medium (250 ≤ F < 500 g/m$^2$), and poor (F ≥ 500 g/m$^2$).

The test results of the oriented silicon steel plates of Examples 1-28 and Comparative Examples 1-6 obtained according to the above method are shown in Table 3.

Table 3

| | Coating Tension (MPa) | Moisture Absorption Resistance | Heat Resistance | Corrosion Resistance | Anti-adhesion property |
|---|---|---|---|---|---|
| Example 1 | 7.5 | 65 | Excellent | Excellent | Good |
| Example 2 | 7.1 | 23 | Excellent | Excellent | Excellent |
| Example 3 | 8.3 | 34 | Excellent | Excellent | Excellent |
| Example 4 | 7.6 | 35 | Excellent | Excellent | Excellent |
| Example 5 | 7.2 | 21 | Excellent | Excellent | Excellent |
| Example 6 | 7.9 | 56 | Excellent | Excellent | Excellent |
| Example 7 | 7.6 | 26 | Excellent | Excellent | Excellent |
| Example 8 | 8.5 | 27 | Excellent | Excellent | Excellent |
| Example 9 | 8.2 | 32 | Excellent | Excellent | Excellent |
| Example 10 | 8.7 | 27 | Excellent | Excellent | Excellent |
| Example 11 | 6.8 | 25 | Excellent | Excellent | Excellent |
| Example 12 | 6.9 | 37 | Excellent | Excellent | Excellent |
| Example 13 | 8.5 | 34 | Excellent | Excellent | Excellent |
| Example 14 | 10.5 | 32 | Excellent | Excellent | Excellent |
| Example 15 | 10.1 | 27 | Excellent | Excellent | Excellent |
| Example 16 | 6.7 | 23 | Excellent | Excellent | Excellent |
| Example 17 | 6.3 | 27 | Excellent | Excellent | Excellent |
| Example 18 | 8.2 | 34 | Excellent | Excellent | Excellent |
| Example 19 | 7.5 | 33 | Excellent | Excellent | Excellent |
| Example 20 | 7.1 | 36 | Excellent | Excellent | Excellent |
| Example 21 | 7.8 | 75 | Excellent | Excellent | Good |
| Example 22 | 7.9 | 34 | Excellent | Excellent | Excellent |
| Example 23 | 8.1 | 38 | Excellent | Excellent | Excellent |
| Example 24 | 7.3 | 43 | Excellent | Excellent | Excellent |
| Example 25 | 7.3 | 37 | Excellent | Excellent | Excellent |
| Example 26 | 7.9 | 46 | Excellent | Excellent | Excellent |
| Example 27 | 7.7 | 56 | Excellent | Excellent | Excellent |
| Example 28 | 7.3 | 65 | Good | Good | Good |
| Comparative Example 1 | 7.6 | **385** | Excellent | Excellent | Excellent |
| Comparative Example 2 | **5.6** | 55 | Excellent | **Poor** | Excellent |
| Comparative Example 3 | 7.4 | **360** | **Poor** | **Poor** | **Poor** |
| Comparative Example 4 | **5.8** | 15 | Excellent | **Poor** | Excellent |
| Comparative Example 5 | 7.3 | **423** | **Poor** | **Poor** | **Poor** |

(continued)

| | Coating Tension (MPa) | Moisture Absorption Resistance | Heat Resistance | Corrosion Resistance | Anti-adhesion property |
|---|---|---|---|---|---|
| Comparative Example 6 | 5.7 | 36 | Excellent | **Poor** | Excellent |

It can be seen from Table 3 that the coatings of the oriented silicon steel plates in Examples 1-28 of the present invention have excellent tension effect (tension in the range of 7.1-10.5 MPa), moisture absorption resistance (phosphorus dissolution content of 75 $\mu$g/150 cm$^2$ or less), and excellent or good heat resistance, corrosion resistance, and anti-adhesion property.

The coatings of the oriented silicon steel plates of Comparative Examples 1-6 cannot meet all of the properties of Examples 1-28 at the same time. Specifically, when the vanadate content is too low, although the coating has a tension that meets the requirement, the phosphorus dissolution amount thereof is relatively high, indicating its poor moisture absorption resistance. When the vanadate content is too high, although phosphate radicals are fixed in the coating material by an excess vanadate, the coating tension thereof cannot meet the requirement of the present invention. The excellent or good heat resistance, corrosion resistance, and anti-adhesion property required by the present invention also cannot be ensured.

The preferred specific examples of the present invention are described above in details. It should be understood that those skilled in the art may perform various modifications and changes based on the concept of the present invention without creative efforts. Therefore, any technical solutions that may be obtained by those skilled in the art by logical analysis, reasoning, or limited experimentation according to the concept of the present invention on basis of prior arts should be within the scope of protection defined by the claims.

In addition, the manners of combining the technical features presented in the present application are not confined to the combinations described in the claims or in the specific examples provided herein. All technical features described in the present application may be freely combined or incorporated in any manner, provided that they do not conflict with one another.

## Claims

1. A coating material for a surface coating of oriented silicon steel, wherein the coating material comprises:

    phosphate, preferably the phosphate is at least one selected from phosphates of Mg, Al, Ca, Zn, and Mn, more preferably the phosphate is magnesium dihydrogen phosphate, aluminum dihydrogen phosphate, calcium dihydrogen phosphate, zinc dihydrogen phosphate, and/or manganese dihydrogen phosphate;
    colloidal silica;
    at least one vanadate selected from vanadates of Ce, Mn, Co, Cu, or Fe, preferably the vanadate is orthovanadate, pyrovanadate, and/or metavanadate of Ce, Mn, Co, Cu, or Fe;
    wherein the coating material does not comprise Cr.

2. The coating material according to claim 1, wherein the coating material comprises phosphate of 25-50%, colloidal silica of 25-50%, and vanadate of 10-50% by mass percentage.

3. The coating material according to claim 1, wherein a mass ratio of the colloidal silica to the phosphate is 0.5-1.5, preferably 1.0-1.5.

4. The coating material according to claim 1, wherein a mass ratio of the vanadate to the phosphate is 0.2-2.0, preferably 0.2-1.0.

5. The coating material according to claim 1, wherein the coating material further comprises:
    boric acid, wherein a content of the boric acid is 0.02-0.2 parts by mass relative to 100 parts by mass of the colloidal silica.

6. The coating material according to claim 1, wherein a particle size of the colloidal silica is 5-50 nm.

7. An oriented silicon steel plate, having a substrate and a coating formed on surface of the substrate, and the coating is formed by using the coating material according to any one of claims 1-6.

8. The oriented silicon steel plate according to claim 7, wherein the phosphate in the coating forms a network or chain structure.

9. The oriented silicon steel plate according to claim 7, wherein the coating comprises vanadium phosphate.

10. The oriented silicon steel plate according to claim 7, wherein a dry film amount of the coating on one side is 2-10 g/m$^2$.

11. The oriented silicon steel plate according to claim 7, wherein the oriented silicon steel plate further has a magnesium silicate layer, and the magnesium silicate layer is located between the substrate and the coating of the oriented silicon steel plate.

12. The oriented silicon steel plate according to claim 7, wherein the coating of the oriented silicon steel plate has a tension of 7.1-10.5 MPa and a phosphorus dissolution content of lower than 75 $\mu$g/150 cm$^2$.

13. A manufacturing method for an oriented silicon steel plate, comprising the following steps:

   1) applying the coating material according to any one of claims 1 to 6 on a substrate of the oriented silicon steel plate; and
   2) performing sintering to form a coating on a surface of the substrate of the oriented silicon steel plate, a surface temperature of the substrate is 800-900°C and a sintering duration is 20 seconds or more during the sintering.

14. The manufacturing method according to claim 13, wherein the manufacturing method satisfies one or more of the following:

   the coating material is applied on the substrate with a dry film amount of 2-10 g/m$^2$ on one side;
   the manufacturing method further includes forming a magnesium silicate layer between the substrate and the coating.

<table>
<tr><td colspan="2" align="center">INTERNATIONAL SEARCH REPORT</td><td>International application No.<br>**PCT/CN2023/103987**</td></tr>
</table>

| A. | CLASSIFICATION OF SUBJECT MATTER |
|---|---|
| | C09D1/00(2006.01)i; C09D7/61(2018.01)i; C23C22/33(2006.01)i |

According to International Patent Classification (IPC) or to both national classification and IPC

| B. | FIELDS SEARCHED |
|---|---|

Minimum documentation searched (classification system followed by classification symbols)

    IPC:C09D,C23C

Documentation searched other than minimum documentation to the extent that such documents are included in the fields searched

Electronic data base consulted during the international search (name of data base and, where practicable, search terms used)

    CNABS, CNTXT, CNKI, VEN: 取向, 硅钢, 钢板, 涂料, 涂覆, 磷酸盐, 胶体, 二氧化硅, 钒酸盐, 硼酸, 硅酸镁, 烧结, orient, silicon steel, steel sheet, paint, coating, phosphate, colloidal, silica, silicon dioxide, vanadate, boric acid, magnesium silicate, sinter

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 106243791 A (FUZHOU UNIVERSITY) 21 December 2016 (2016-12-21)<br>    claims 1-8, and description, paragraph 20 | 1-14 |
| X | CN 108866529 A (MAANSHAN IRON & STEEL CO., LTD.) 23 November 2018 (2018-11-23)<br>    claims 1-10 | 1-14 |
| A | CN 114106593 A (BAOSHAN IRON & STEEL CO., LTD.) 01 March 2022 (2022-03-01)<br>    entire document | 1-14 |
| A | US 3930905 A (ASEA AB) 06 January 1976 (1976-01-06)<br>    entire document | 1-14 |
| A | CN 101509131 A (BAOSHAN IRON & STEEL CO., LTD.) 19 August 2009 (2009-08-19)<br>    entire document | 1-14 |
| A | CN 108026648 A (NIPPON PAINT INDUSTRIAL COATINGS CO., LTD. et al.) 11 May 2018 (2018-05-11)<br>    entire document | 1-14 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **2023-09-06** | **13 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | | International application No. |
| --- | --- | --- |
| Information on patent family members | | **PCT/CN2023/103987** |

| Patent document cited in search report | | | Publication date (day/month/year) | Patent family member(s) | | | Publication date (day/month/year) |
| --- | --- | --- | --- | --- | --- | --- | --- |
| CN | 106243791 | A | 21 December 2016 | None | | | |
| CN | 108866529 | A | 23 November 2018 | None | | | |
| CN | 114106593 | A | 01 March 2022 | None | | | |
| US | 3930905 | A | 06 January 1976 | IT | 999680 | B | 10 March 1976 |
| | | | | GB | 1448718 | A | 08 September 1976 |
| | | | | BE | 806145 | A | 15 February 1974 |
| | | | | SE | 367844 | B | 10 June 1974 |
| | | | | CA | 984689 | A | 02 March 1976 |
| | | | | JPS | 4976740 | A | 24 July 1974 |
| | | | | JPS | 5318175 | B2 | 13 June 1978 |
| | | | | DE | 2353796 | A1 | 09 May 1974 |
| | | | | DE | 2353796 | B2 | 08 July 1976 |
| | | | | FR | 2204503 | A1 | 24 May 1974 |
| CN | 101509131 | A | 19 August 2009 | None | | | |
| CN | 108026648 | A | 11 May 2018 | JP | 6087461 | B1 | 01 March 2017 |
| | | | | JP | 2017197795 | A | 02 November 2017 |
| | | | | AU | 2017257044 | A1 | 24 May 2018 |
| | | | | AU | 2017257044 | B2 | 07 February 2019 |
| | | | | PH | 12018500849 | A1 | 05 November 2018 |
| | | | | TW | 201807254 | A | 01 March 2018 |
| | | | | TWI | 737701 | B | 01 September 2021 |
| | | | | SG | 11201801742 | XA | 27 April 2018 |
| | | | | NZ | 741908 | A | 26 July 2019 |
| | | | | CA | 3005266 | A1 | 02 November 2017 |
| | | | | CA | 3005266 | C | 27 November 2018 |
| | | | | WO | 2017187799 | A1 | 02 November 2017 |
| | | | | MX | 2018009384 | A | 05 September 2018 |
| | | | | MY | 172928 | A | 14 December 2019 |
| | | | | KR | 20180025877 | A | 09 March 2018 |
| | | | | KR | 101868530 | B1 | 19 June 2018 |
| | | | | ES | 2850627 | T3 | 31 August 2021 |
| | | | | US | 2018305802 | A1 | 25 October 2018 |
| | | | | US | 11136659 | B2 | 05 October 2021 |
| | | | | EP | 3354772 | A1 | 01 August 2018 |
| | | | | EP | 3354772 | A4 | 25 September 2019 |
| | | | | EP | 3354772 | B1 | 30 December 2020 |

Form PCT/ISA/210 (patent family annex) (July 2022)

13

**REFERENCES CITED IN THE DESCRIPTION**

**Patent documents cited in the description**

- CN 101790599 A
- CN 101223300 A

- CN 102119239 A